# EUROPEAN PATENT APPLICATION

(11) **EP 4 679 865 A1**
(43) Date of publication of application: **14.01.2026**
(21) Application number: 25187936.7
(22) Date of filing: 07.07.2025
(51) Int. Cl.: H04W 4/029, H04W 4/33

(54) **ELECTRONIC DEVICE AND OPERATING METHOD THEREOF**

(30) Priority: 08.07.2024 KR 20240089574
(71) Applicant: LG Electronics Inc., Yeongdeungpo-gu Seoul 07336 (KR)
(72) Inventor: KIM, Boram, Seoul (KR); YOO, Jiho, Seoul (KR); SHIN, Woojin, Seoul (KR); KIM, Seonghyok, Seoul (KR)
(74) Representative: Vossius & Partner Patentanwälte Rechtsanwälte mbB

(57) **Abstract**

An electronic device according to an embodiment of the present disclosure may comprise a memory configured to store location data of a user; and at least one of processors configured to: obtain a cumulative location data set based on the location data, generate a heat map representing a location distribution of the user based on the cumulative location data set, and obtain an activity space of the user based on the generated heat map.

## Description

### BACKGROUND OF THE INVENTION

### 1.Field of the Invention

The present disclosure relates to an electronic device, and more specifically, to the electronic device that estimate a user's activity space based on a user's location data.

### 2. Discussion of the Related Art

Conventional technology for identifying user behavior information or location information is a method of using sensors that rely on infrastructure installed in space.

Inexpensive sensors such as passive infrared intrusion detection sensors or ultrasonic sensors are installed in a large space, data is collected by recording with a camera, and tomography is performed using a wireless signal transceiver. In this method, the user's location may only be determined in the location where the sensor is directly installed.

Depending on the user's location, control of home appliances within the home may be performed.

However, according to the prior art, home appliances may be controlled to detect a moving user and face the area where the user is, but do not take into account the space blocked by the wall and the user's activity radius within the space.

That is, according to the prior art, control of home appliances is limited to the user's location, so there is a limit to efficient control of home appliances.

### SUMMARY OF THE INVENTION

The purpose of the present disclosure may be to estimate the shape of space and the user's activity radius using user location data obtained through a sensor.

The purpose of the present disclosure may be to optimally control home appliances based on the shape of space and the user's activity radius.

The purpose of the present disclosure may be to identify the relative location of the place where the user mainly stays and home appliances by using a heat map accumulating user location information.

The purpose of the present disclosure may be to provide easy information to the user according to the user's location and interaction between home appliances.

An electronic device according to an embodiment of the present disclosure may comprise a memory configured to store location data of a user; and at least one processor configured to: obtain a cumulative location data set based on the location data, generate a heat map representing a location distribution of the user based on the cumulative location data set, and obtain an activity space of the user based on the generated heat map.

An operating method of according to an embodiment of the present disclosure may comprise storing location data of a user; obtaining a cumulative location data set based on the location data; generating a heat map representing a location distribution of the user based on the cumulative location data set; and obtaining an activity space of the user based on the generated heat map.

According to an embodiment of the present disclosure, the energy efficiency of home appliances may be improved through optimal control of home appliances according to the type of user's living space.

According to an embodiment of the present disclosure, the user's convenience may be greatly improved by checking the user's activity radius and performing the operation of the home appliance in advance in the mainly used space.

According to an embodiment of the present disclosure, the relative location of the home appliance and the place where the user mainly stays are identified, so that control of the home appliance may be controlled in a more user-friendly manner.

According to an embodiment of the present disclosure, the location between the home appliance and the user may be known through the user's location, so information that facilitates interaction with nearby home appliances may be provided to the user.

### BRIEF DESCRIPTION OF THE DRAWINGS

FIG. 1 is a block diagram for illustrating elements of an artificial intelligence device according to an embodiment of the present disclosure.
FIG. 2 is a diagram for illustrating the configuration of an artificial intelligence server according to an embodiment of the present disclosure.
FIG. 3 is a flowchart for illustrating a method of operating an artificial intelligence device according to an embodiment of the present disclosure.
FIG. 4 is a flowchart illustrating a process of obtaining a user's activity space based on a cumulative location data set according to an embodiment of the present disclosure.
FIG. 5 is a diagram showing a heat map based on a cumulative location data set according to an embodiment of the present disclosure.
FIG. 6 is a diagram showing a clustering map generated based on a heat map according to an embodiment of the present disclosure.
FIGS. 7A and 7B are diagrams illustrating a process of obtaining the shape of a user's activity space from a clustering map according to an embodiment of the present disclosure.
FIG. 8 is a diagram for illustrating activity space information.
FIGS. 9A and 9B are diagrams illustrating an example of identifying a main occupied space within a user's activity space according to an embodiment of the present disclosure.
FIG. 10 is a diagram illustrating the configuration of a spatial understanding system according to an embodiment of the present disclosure.
FIG. 11 is a flowchart for illustrating a method of operating an artificial intelligence device according to another embodiment of the present disclosure.
FIGS. 12A and 12B are diagrams showing the linkage between user's location data and an event of home appliance.
FIG. 13 is a diagram illustrating an example of identifying the estimated location of a home appliance according to an embodiment of the present disclosure.
FIG. 14 is a diagram illustrating a location estimation system according to an embodiment of the present disclosure.
FIG. 15 is a flowchart for illustrating a method of operating an artificial intelligence device according to another embodiment of the present disclosure.
FIG. 16 is a diagram illustrating a screen that provides the user's activity space, the main occupied space, and the location of home appliance according to an embodiment of the present disclosure.
FIG. 17 is a flowchart for illustrating a method of operating an artificial intelligence device according to another embodiment of the present disclosure.
FIGS. 18 and 19 are diagrams illustrating an example of controlling a cleaning path of a robot vacuum cleaner differently based on the main occupied space of each of a first user and a second user according to an embodiment of the present disclosure.
FIGS. 20A and 20B are diagrams illustrating an example of extracting main occupied space for each time period and controlling cooling of the extracted main occupied space according to an embodiment of the present disclosure.
FIG. 21 is a diagram for illustrating the configuration of an artificial intelligence cloud device according to another embodiment of the present disclosure.
FIG. 22 is a sequence diagram illustrating a method of operating a system according to an embodiment of the present disclosure.

### DETAILED DESCRIPTION OF THE PREFERRED EMBODIMENTS

Artificial intelligence refers to the field of researching artificial intelligence or methodology to create it, and machine learning refers to the field of defining various problems dealt with in the field of artificial intelligence and researching methodology to solve them.

Machine learning is also defined as an algorithm that improves the performance of a task through consistent experience.

Artificial Neural Network (ANN) is a model used in machine learning, it may refer to an overall model with problem-solving capability that is composed of artificial neurons (nodes) that form a network through the combination of synapses.

Artificial neural network may be defined by connection pattern between neurons in different layers, a learning process that updates model parameter, and an activation function that generates output value.

An artificial neural network may include an input layer, an output layer, and optionally one or more hidden layers. Each layer may include one or more neurons, and the artificial neural network may include synapse connecting neurons. In an artificial neural network, each neuron may output the input signals input through the synapse, weight, and value of activation function for bias.

Model parameter refer to a parameter determined through learning and includes the weight of synapse connection and the bias of neurons. Hyperparameter refer to a parameter that must be set before learning in a machine learning algorithm and includes learning rate, number of repetition, mini-batch size, initialization function, etc.

The purpose of learning an artificial neural network may be seen as determining model parameter that minimize the loss function. The loss function may be used as an indicator to determine optimal model parameter during the learning process of an artificial neural network.

Machine learning may be classified into supervised learning, unsupervised learning, and reinforcement learning depending on the learning method.

Supervised learning refers to a method of training an artificial neural network with a label for the learning data given, a label may mean the correct answer (or result value) that the artificial neural network must infer when learning data is input to the artificial neural network.

Unsupervised learning may refer to a method of training an artificial neural network in a state where no label for training data is given.

Reinforcement learning may refer to a learning method in which an agent defined within an environment learns to select an action or action sequence that maximizes the cumulative reward in each state.

Among artificial neural networks, machine learning implemented with a deep neural network (DNN) that includes multiple hidden layers is also called deep learning, and deep learning is a part of machine learning.

Hereinafter, machine learning is used to include deep learning.

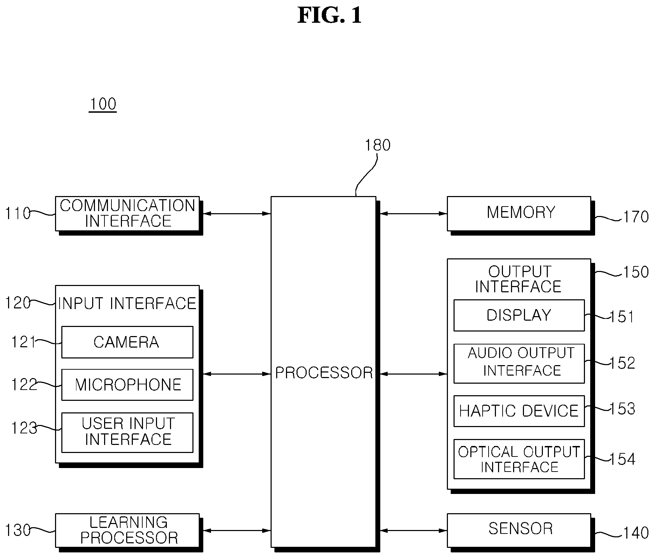

FIG. 1 is a block diagram for illustrating elements of an artificial intelligence device according to an embodiment of the present disclosure.

The artificial intelligence device 100 may be implemented as a fixed or movable device such as a TV, a projector, a mobile phone, a smartphone, a desktop computer, a laptop, a digital broadcasting terminal, a PDA (personal digital assistant), a PMP (portable multimedia player), a navigation, a tablet PC, a wearable device, and a set-top boxe (STB), a DMB receiver, a radio, a washing machine, a refrigerator, a desktop computer, a digital signage, a robot, a vehicle, etc.

Referring to FIG. 1, the artificial intelligence device 100 may include a communication interface 110, an input interface 120, a learning processor 130, a sensor 140, an output interface 150, a memory 170, and a processor 180.

The communication interface 110 may transmit and receive data with external device such as other artificial intelligence device or the AI server 200 using wired or wireless communication technology. For example, the communication interface 110 may transmit and receive sensor information, user input, learning model, and control signal with external device.

Communication technologies used by the communication interface 110 include Global System for Mobile communication (GSM), Code Division Multi Access (CDMA), Long Term Evolution (LTE), 5G, Wireless LAN (WLAN), and Wireless-Fidelity (Wi-Fi). , Bluetooth (Bluetooth), RFID (Radio Frequency Identification), Infrared Data Association (IrDA), ZigBee, NFC (Near Field Communication), etc.

The input interface 120 may acquire various types of data.

The input interface 120 may include a camera 121 for capturing image, a microphone 122 for receiving audio signals, and a user input interface 123 for receiving information from a user.

The camera 121 or the microphone 122 is treated as a sensor, and the signal obtained from the camera 121 or the microphone 122 may be called sensing data or sensor information.

The input interface 120 may obtain training data for model learning and input data to be used when obtaining an output using the learning model. The input interface 120 may acquire unprocessed input data, and in this case, the processor 180 or the learning processor 130 may extract input feature by preprocessing the input data.

The camera 121 processes image frame such as still image or moving image obtained by an image sensor in video call mode or photographing mode. Processed image frame may be displayed on display 151 or stored in memory 170.

The microphone 122 processes external acoustic signal into electrical voice data. The processed voice data may be utilized in various ways depending on the function (or application being executed) being performed by the artificial intelligence device 100. Meanwhile, various noise removal algorithms may be applied to the microphone 122 to remove noise generated in the process of receiving an external acoustic signal.

The user input interface 123 is for receiving information from the user, when information is input through the user input interface 123, the processor 180 may control the operation of the artificial intelligence device 100 to correspond to the input information.

The user input interface 123 is a mechanical input means (or mechanical key, for example, a button, dome switch, jog wheel, or jog switch located on the front/rear or side of the artificial intelligence device 100). etc.) and a touch input means.

As an example, the touch input may consist of a virtual key, soft key, or visual key displayed on the touch screen through software processing, or a touch key placed in a part other than the touch screen.

The learning processor 130 may train a model composed of an artificial neural network using training data. The learned artificial neural network may be referred to as a learning model. A learning model may be used to infer a result value for new input data other than learning data, and the inferred value may be used as the basis for a decision to perform an operation.

The learning processor 130 may perform AI processing together with the learning processor 240 of the AI server 200.

The learning processor 130 may include memory integrated or implemented in artificial intelligence device 100. The learning processor 130 may be implemented using the memory 170, an external memory directly coupled to the artificial intelligence device 100, or a memory maintained in an external device.

The sensor 140 may obtain at least one of internal information of the artificial intelligence device 100, information on the surrounding environment of the artificial intelligence device 100, or user information using various sensors.

The sensor 140 may include at least one of a proximity sensor, an illumination sensor, an acceleration sensor, a magnetic sensor, a gyro sensor, an inertial sensor, an RGB sensor, an IR sensor, a fingerprint recognition sensor, an ultrasonic sensor, an optical sensor, a microphone, a lidar sensor, or a radar sensor.

The output interface 150 may generate output related to vision, hearing, or tactile sensation.

The output interface 150 may include a display 151 that outputs an image, an audio output interface 152 that outputs audio, a haptic device 153 that outputs tactile information, and an optical output interface 154 that outputs light.

The display 151 displays (outputs) information processed by the artificial intelligence device 100. For example, the display 151 may display execution screen information of an application running on the artificial intelligence device 100, or user interface (UI) and graphic user interface (GUI) information according to the execution screen information.

The display 151 may be implemented as a touch screen by forming a mutual layer structure or being integrated with the touch sensor. The touch screen functions as a user input interface 123 that provides an input interface between the artificial intelligence device 100 and the user, and may simultaneously provide an output interface between the artificial intelligence device 100 and the user.

The audio output interface 152 may output audio data received from the communication interface 110 or stored in the memory 170 in call signal reception, call mode or recording mode, voice recognition mode, broadcast reception mode, etc.

The audio output interface 152 may include at least one of a receiver, a speaker, or a buzzer.

The haptic device 153 generates various tactile effects that the user may feel. A representative example of a tactile effect generated by the haptic device 153 may be vibration.

The light output interface 154 uses light from the light source of the artificial intelligence device 100 to output a signal to notify that an event has occurred. Examples of events that occur in the artificial intelligence device 100 may include receiving a message, receiving a call signal, a missed call, an alarm, a schedule notification, receiving an email, receiving information through an application, etc.

The memory 170 may store data supporting various functions of the artificial intelligence device 100. For example, the memory 170 may store input data obtained from the input interface 120, learning data, learning model, learning history, etc.

The processor 180 may determine at least one executable operation of the artificial intelligence device 100 based on information determined or generated using a data analysis algorithm or a machine learning algorithm.

The processor 180 may control the elements of the artificial intelligence device 100 to perform the determined operation.

To this end, the processor 180 may request, search, receive, or utilize data from the learning processor 130 or the memory 170, and may control elements of the artificial intelligence device 100 to be performed an operation that is predicted or an operation that is determined to be desirable among the at least one executable operation.

If linkage with an external device is necessary to perform a determined operation, the processor 180 may generate a control signal to control the external device and transmit the generated control signal to the external device.

The processor 180 may obtain intent information for user input and determine the user's request based on the obtained intent information.

The processor 180 may obtain intent information corresponding to the user input using at least one of a STT (Speech To Text) engine for converting voice input into a character string or a Natural Language Processing (NLP) engine for acquiring intent information of natural language.

At least one of the STT engine and the NLP engine may be composed of at least a portion of an artificial neural network learned according to a machine learning algorithm. And, at least one of the STT engine or the NLP engine may be learned by the learning processor 130, learned by the learning processor 240 of the AI server 200, or learned by distributed processing thereof.

The processor 180 collects history information including the user's feedback on the operation of the artificial intelligence device 100 and stores it in the memory 170 or the learning processor 130 or the AI server 200, etc. May be transmitted to external devices. The collected historical information may be used to update the learning model.

The processor 180 may control at least some of the elements of the artificial intelligence device 100 to run an application program stored in the memory 170.

The processor 180 may operate two or more of the elements included in the artificial intelligence device 100 in combination with each other in order to run the application program.

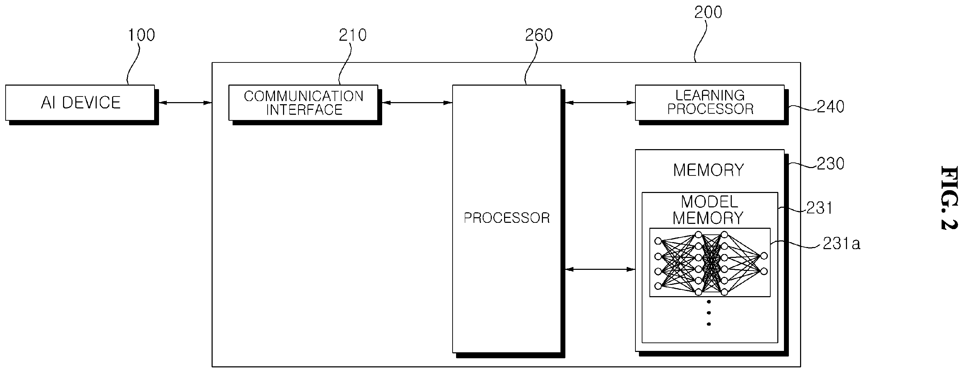

FIG. 2 is a diagram for illustrating the configuration of an artificial intelligence server according to an embodiment of the present disclosure.

Referring to FIG. 2, the AI server 200 may refer to a device that trains an artificial neural network using a machine learning algorithm or uses a learned artificial neural network.

The AI server 200 may be composed of a plurality of servers to perform distributed processing, and may be defined as a 5G network. The AI server 200 may be included as a part of the artificial intelligence device 100 and may perform at least part of the AI processing.

The AI server 200 may include a communication interface 210, a memory 230, a learning processor 240, and a processor 260.

The communication interface 210 may transmit and receive data with an external device such as the artificial intelligence device 100.

The memory 230 may include a model memory 231. The model memory 231 may store a model (or artificial neural network, 231a) that is being trained or has been learned through the learning processor 240.

The learning processor 240 may train the artificial neural network 231a using training data. The learning model may be used while mounted on the AI server 200 of the artificial neural network, or may be mounted and used on an external device such as the artificial intelligence device 100.

The learning model may be implemented in hardware, software, or a combination of hardware and software. When part or all of the learning model is implemented as software, one or more instructions constituting the learning model may be stored in the memory 230.

The processor 260 may infer a result value for new input data using a learning model and generate a response or control command based on the inferred result value.

Hereinafter, the artificial intelligence device 100 or AI server 200 may be referred to as an electronic device.

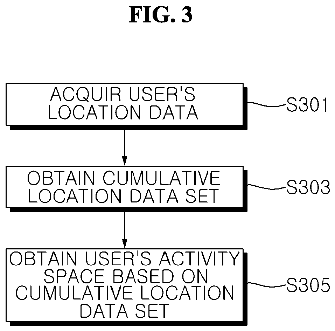

FIG. 3 is a flowchart for illustrating a method of operating an artificial intelligence device according to an embodiment of the present disclosure.

Hereinafter, one or more processors may be provided.

Referring to FIG. 3, the processor 180 of the artificial intelligence device 100 may acquire user's location data (S301).

In one embodiment, the processor 180 may acquire the user's location data through either the sensor 140 provided in the artificial intelligence device 100 or a sensor provided separately from the artificial intelligence device 100.

The sensor used to acquire the user's location data may be a millimeter wave (mmWave) sensor. The millimeter wave sensor may be a sensor that detects an object using an electromagnetic wave with a very short wavelength. The Millimeter wave sensor may be placed in a fixed location.

The millimeter wave sensor may include a transmitting antenna and a receiving antenna.

The millimeter wave sensor's transmitting antenna may transmit an electromagnetic wave operating in a frequency range between 30 GHz and 300 GHz. The receiving antenna of the millimeter wave sensor may receive a reflected electromagnetic wave when the transmitted electromagnetic wave hit an object (for example, a user).

The millimeter wave sensor may measure a distance to an object based on a time it takes for the transmitted electromagnetic wave to reflect and return to the object. A detection area in which the millimeter wave sensor may detect an object installed at a fixed location may be determined. The processor 180 may identify the user's location through a coordinate within the detection area.

The processor 180 may convert the distance between the user and the millimeter wave sensor received from the millimeter wave sensor into coordinate information, and obtain the converted coordinate information as the user's location data. The processor 180 may obtain the user's location data in a real time.

The processor 180 may detect movement of the object by recognizing a change in the distance between the millimeter wave sensor and the object.

The processor 180 may remove location data that moves within a short time from among the acquired location data. This is to remove noise or data about object other than person. The short time may be 0.1 seconds, but this is only an example.

The processor 180 may identify the user based on sensing information received from the millimeter wave sensor. The sensing information may include at least one of the distance between the millimeter wave sensor and the object, and a shape or a size of the object based on a phase change between transmitted and reflected electromagnetic waves.

The processor 180 may identify the user based on the shape or the size of the object. That is, the processor 180 may identify each of a plurality of users whose object has different shape or size.

The processor 180 may obtain a cumulative location data set based on the acquired user location data (S303).

The cumulative location data set may be a data set that accumulates the number of times a user is detected at each location based on location data. The user's location may be expressed as a coordinate in a space. Each cumulative location data included in the cumulative location data set may include the coordinate and a frequency in the space.

The cumulative position data set is a data set that takes into account a maximum detection width, a maximum detection length, and a cumulative frequency of each position of the millimeter wave sensor, and may be stored in the memory 140. Accordingly, a capacity of the accumulated data set has a maximum size, so it has the advantage of not taking up a lot of capacity of the memory 140.

The processor 180 may obtain the cumulative location data set using location data accumulated during a certain period of time. The processor 180 may obtain the cumulative location data set by updating location data acquired during the certain period of time.

The processor 180 may obtain the user's activity space based on the cumulative location data set (S305).

In one embodiment, the processor 180 may estimate the user's activity space within the sensing area based on the cumulative location data set. The detection area may be an area where the object may be detected through the millimeter wave sensor. The detection area may be formed according to an angle of the electromagnetic wave transmitted by the millimeter wave sensor and a transmission distance of the electromagnetic wave.

Processor 180 may generate clustering data by clustering the cumulative location data set. The processor 180 may estimate the user's activity space from the clustering data using a polygon algorithm.

The processor 180 may obtain activity space information corresponding to the estimated user's activity space. The process of obtaining the user's activity space based on the cumulative location data set is described in detail.

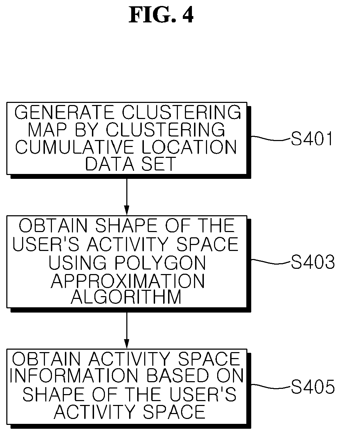

FIG. 4 is a flowchart illustrating a process of obtaining a user's activity space based on a cumulative location data set according to an embodiment of the present disclosure.

FIG. 4 may be a diagram specifying step S305 of FIG. 3.

The processor 180 of the artificial intelligence device 100 may generate a clustering map by clustering the cumulative location data set (S401).

In one embodiment, the processor 180 may generate clustering data using a density-based clustering technique. The clustering data may be referred to as a clustering map.

The processor 180 may generate a heat map representing the distribution of the cumulative location data using the cumulative location data set, and may generate the clustering data based on the generated heat map.

The processor 180 may extract a plurality of cluster areas from the cumulative location data set using the density-based clustering technique and generate the clustering data using the extracted plurality of cluster areas.

The density-based clustering technique may be the Density-Based Spatial Clustering of Applications with Noise (DBSCAN) technique.

In the DBSCAN technique, the minimum number of data pointer required to form a cluster area may be set. Then, the processor 180 may calculate the number of other data points within a radius of the data points in the cumulative location data set. Thereafter, the processor 180 may identify a high-density area with a dense number of other data points as a cluster area, and may regard a low-density area with a sparse number of other data point as a noise.

Processor 180 may identify high-density areas to obtain the clustering data (or a final clustering map).

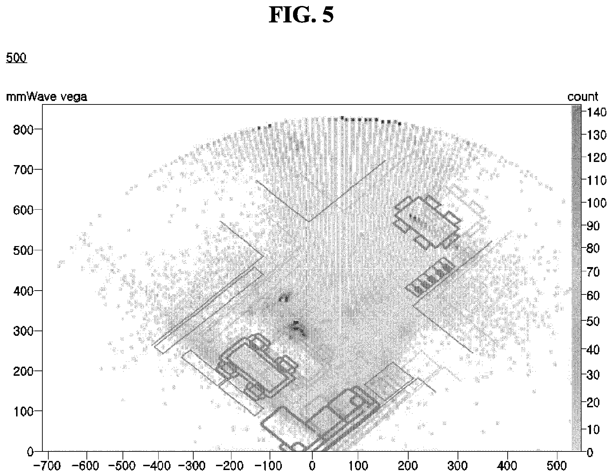

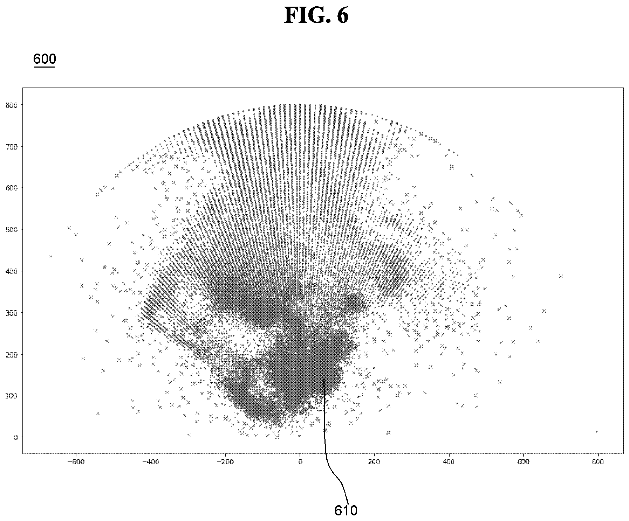

This will be described with reference to FIGS. 5 and 6 .

FIG. 5 is a diagram showing a heat map based on a cumulative location data set according to an embodiment of the present disclosure, and FIG. 6 is a diagram showing a clustering map generated based on the heat map according to an embodiment of the present disclosure.

In FIG. 5, an arrangement of actual furnitures and walls is projected onto a heat map 500 for a reference.

The processor 180 may generate a cumulative location data set by accumulating the user's location data acquired through the millimeter wave sensor. The processor 180 may generate the heat map 500 as shown in FIG. 5 using the cumulative location data set.

A horizontal axis of the heat map 500 may represent a detection width of the millimeter wave sensor, and a vertical axis may represent a detection length of the millimeter wave sensor. The detection width may have a positive value to the right, centered on the location of the millimeter wave sensor, and may have a negative value to the left, centered around the location of the millimeter wave sensor.

Each point of the heat map 500 may represent a cumulative number (or a cumulative frequency) of location data.

The cumulative location data set 500 may be expressed in the form of a heat map. The heat map may be a graphical tool that visually represents the cumulative distribution of the user's location data. The heat map may express a density or a frequency of location data using color on a two-dimensional grid. A darker color may indicate a higher frequency, and a lighter color may indicate a lower frequency.

Referring to FIG. 5, the frequency of location data may be expressed as 0 to 140, with a higher frequency being displayed in red and a lower frequency being displayed in blue.

In one embodiment, the processor 180 may generate a first type of heat map based on a cumulative location data set acquired over a preset period of time. The preset period of time may be any one of a lunch time period, a dinner time period, or a specific time period.

In another embodiment, the processor 180 may identify a user and generate a second type of heat map based on a cumulative location data set of the identified user. That is, the processor 180 may generate a heat map corresponding to each of a plurality of users. Heat maps corresponding to each user may be used to perform personalized control of home appliances.

In another embodiment, the processor 180 may generate a third type of heat map using a cumulative location data set of user identified during a preset period of time.

The processor 180 may obtain a clustering map 600 as shown in FIG. 6 based on the heat map 500. The clustering map 600 may be referred to as a clustering graph or a clustering space.

The processor 180 may obtain the clustering map 600 using the DBSCAN technique.

A horizontal axis of the clustering map 600 may represent the detection width of the millimeter wave sensor, and a vertical axis may represent the detection length of the millimeter wave sensor. The detection width may have a positive value to the right, centered around the position of the millimeter wave sensor, and may have a negative value to the left, centered around the position of the millimeter wave sensor.

The processor 180 may identify high-density areas and low-density areas based on each data point included in the clustering map 600 using the DBSCAN technique.

The processor 180 may identify a clustering area 610 containing high density regions from the clustering map 600 .

Again, Fig. 4 will be described.

The processor 180 may obtain a shape of the user's activity space from the clustering map generated using a polygon approximation algorithm (S403).

In one embodiment, the polygon approximation algorithm may be either a Ramer-Douglas-Peucker algorithm or a convex hull algorithm.

The processor 180 may obtain the shape of the user's activity space matching the clustering area 610 using the polygon approximation algorithm.

The Ramer-Douglas-Peucker algorithm may be an algorithm that simplifies an outline of the clustering area 610 to generate a polygonal area.

The Ramer-Douglas-Peucker algorithm may simplify the clustering area 610 in the following manner.
1. Draw a straight line connecting a start point and an end point.
2. Find a point furthest from the straight line. If a distance between the straight line and this point is greater than a threshold, include that point and generate two new straight line segments.
3. This process is repeated recursively to simplify all straight segments so that they have a distance less than the threshold.

The convex hull algorithm may be an algorithm that obtains a convex hull of each group separately when a plurality of data points are divided into two groups, and combines convex hulls of the groups to obtain an entire convex hull as a polygonal area.

The processor 180 may obtain activity space information based on the obtained shape of the user's activity space (S405).

In one embodiment, the activity space information may include at least one of the coordinates of the vertices of a polygon representing the activity space, a form of the activity space, an area of the activity space, a length of the activity space, or the effective angle based on the millimeter wave sensor.

The processor 180 may acquire activity space information including at least one of an area of the activity space or an angle formed with the activity space and the millimeter wave sensor that collects the user's location data based on the shape of the user's activity space.

The processor 180 may control the operation of a home appliance based on activity space information. This will be described later.

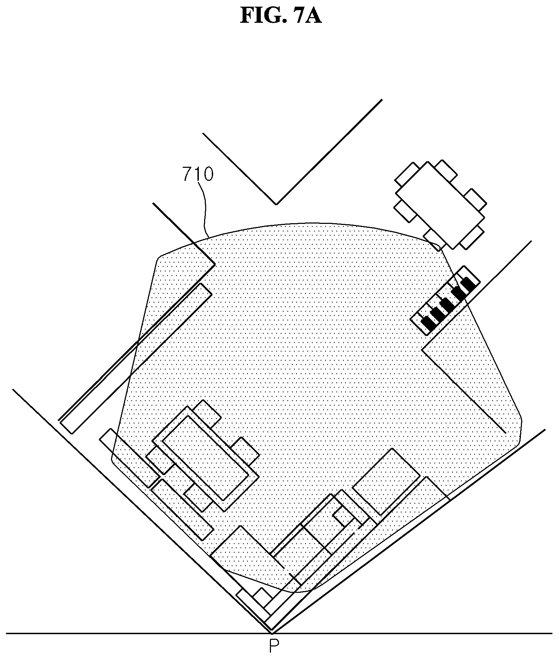

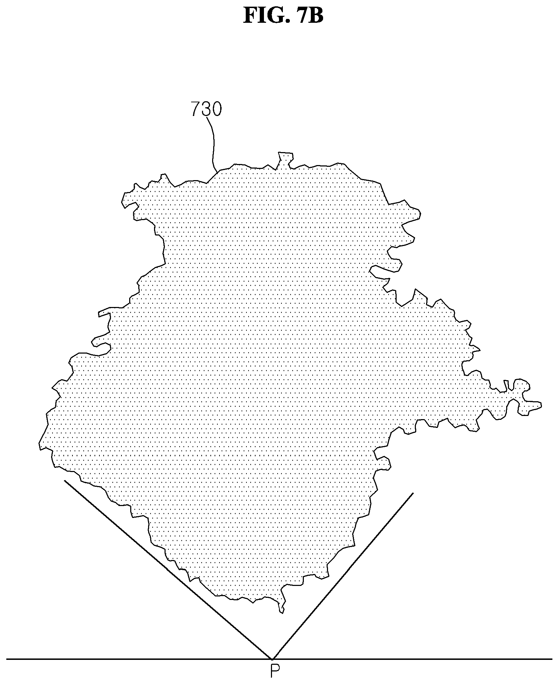

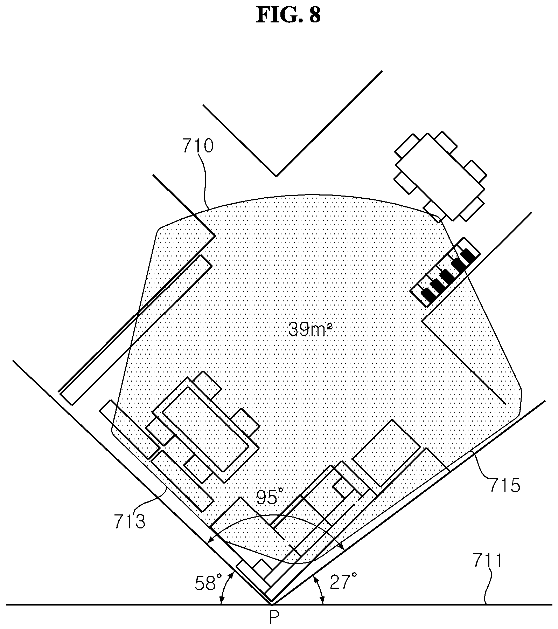

FIGS. 7A and 7B are diagrams illustrating a process of obtaining the shape of a user's activity space from a clustering map according to an embodiment of the present disclosure, and FIG. 8 is a diagram illustrating activity space information.

Referring to FIGS. 7A and 7B, user's activity spaces 710 and 730 obtained from the clustering map 600 of FIG. 6 using the polygon approximation algorithm are shown.

In FIG. 7A, the arrangement of actual furnitures and walls is projected onto the activity space 710 for a reference.

The processor 180 may generate the user's activity spaces 710 and 730 from the clustering area 610 of the clustering map 600 using the polygon algorithm described above.

The processor 180 may obtain activity space information from the activity spaces 710 and 730. The activity space information may include at least one of coordinates of vertices of the polygons represented by the activity spaces 710 and 730, an area of the activity spaces 710 and 730, or one or more effective angles of the activity spaces 710 and 730 based on the millimeter wave sensor.

FIG. 8 is a diagram showing activity space information obtained with reference to the clustering area 710 of FIG. 7A. The activity space information may include at least one of the effective angles (58 degrees, 27 degrees, 95 degrees) of the activity space 710 or the area of the activity space 710 measured based on the position (P) of the millimeter wave sensor.

The first effective angle (58 degrees) of the activity space 710 may be an angle formed between one side 711 of a wall where a position (P) of the millimeter wave sensor is placed and a first side 713 of the activity space 710.

The second effective angle (27 degrees) of the activity space 710 may be the angle formed between one side 711 of the wall where the position (P) of the millimeter wave sensor is placed and a second side 715 of the activity space 710. The first side 713 and the second side 715 are adjacent, and an extension line of the second side 715 may intersect an extension line of the first side 713.

A third effective angle (95 degrees) of the activity space 710 may be an angle formed by the extension line of the first side 713 and the extension line of the second side 715 based on the position (P) of the millimeter wave sensor.

The processor 180 may calculate the area of the activity space 710 using the coordinates of the vertices of the polygon representing the activity space 710. The processor 180 may calculate the area of the activity space 710 using a known Shoelace formula.

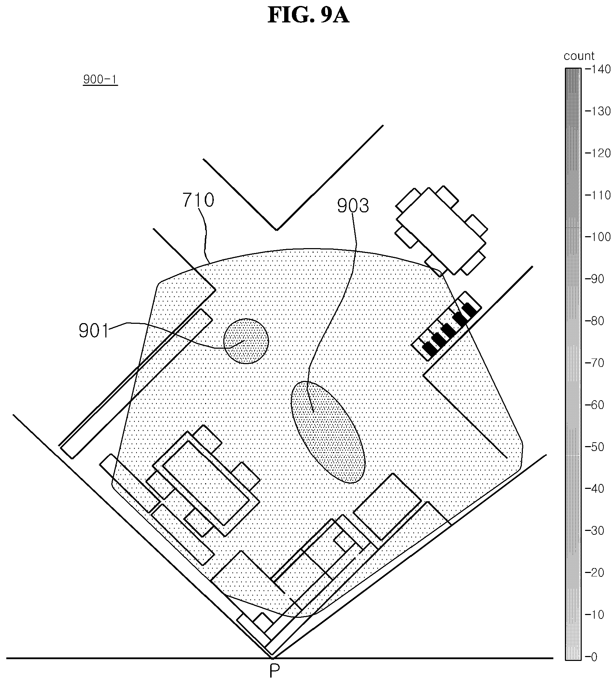

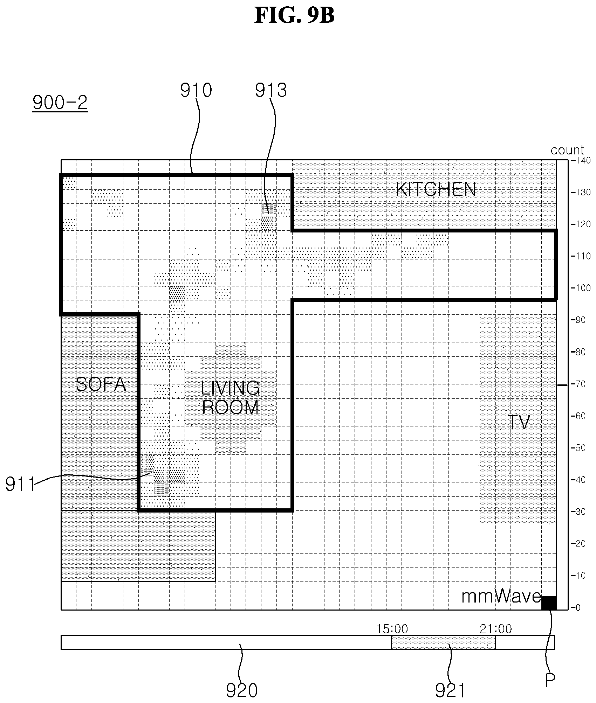

FIGS. 9A and 9B are diagrams illustrating an example of identifying a main occupied space within a user's activity space according to an embodiment of the present disclosure.

FIGS. 9A and 9B illustrate the user's activity space and main occupied space identified within the detection area that may be detected by the millimeter wave sensor.

The main occupied space may be a space representing an area where the accumulated frequency of the user's location data is more than a preset frequency.

Referring to FIG. 9A, main occupied spaces 901 and 903 and the location P of the millimeter wave sensor may be identified in the activity space 710 of the user. Each of the main occupied spaces 901 and 903 may be a space in which the frequency of the cumulative location data is higher than a preset frequency.

Referring to FIG. 9B, main occupied spaces 911 and 913 and the location P of the millimeter wave sensor may be identified in the user's activity space 910. Each of the main occupied spaces 911 and 913 may be a space in which the frequency of the cumulative location data is higher than a preset frequency.

The user's activity space 910 in FIG. 9B may be a space obtained based on location data collected from 3 PM to 9 PM.

The artificial intelligence device 100 may transmit information on the user's activity space 710, 910 and main occupied spaces 901, 903, 911, 913 to the user device through the communication interface 110.

Information on the user's activity space 710, 910 may include activity space information. Information on the main occupied space 901, 903, 911, 913 may include at least one of location information, an area, or a shape of the main occupied space 901, 903, 911, 913.

The user device may be any one of devices such as a smartphone, a smart pad, a PC, or a laptop. The user device may include all components of the artificial intelligence device 100 of FIG. 1. The user device may be an artificial intelligence device 100.

A home appliance management application that provides information on the activity space based on the user's location data may be installed in the user device. As shown in FIG. 9A or 9B through the installed home appliance management application, the user device may display an activity radius screen 900-1, 900-2 including the user's activity space 710, 910 and the main occupied space 901, 903, 911, 913.

In another embodiment, the processor 180 of the artificial intelligence device 100 may display the activity radius screen 900-1, 900-2 including the user's activity space 710, 910 and the main occupied space 901, 903, 911, 913 on the display 151.

As such, according to an embodiment of the present disclosure, the user's activity space and main occupied space may be obtained through the millimeter wave sensor without a need for a photographing device such as a camera. The user's activity space and the main occupied space may be used to efficiently control the home appliance in the future.

Additionally, the user's activity space and the main occupied space may be estimated without using the camera, so the user's privacy may be protected.

The processor 180 may control an operation of the home appliance based on the main occupied space 901, 903, 911, 913. This will be described later.

Meanwhile, in FIGS. 9A and 9B , electronic devices such as furniture or TV may be identified and displayed within the user's activity space 710 and 910.

Meanwhile, referring to FIG. 9B, the activity radius screen 900-2 may further include a progress bar 920. The progress bar 920 may be a bar that provides the user's activity space and main occupied space in a specific time period. The progress bar 920 may include a plurality of time period items corresponding to a plurality of time periods.

When a time period item 921 on the progress bar 920 is selected, the processor 180 of the artificial intelligence device 100 may identify the user's activity space 910 and the main occupied space 911, 913 on the activity radius screen 900-2.

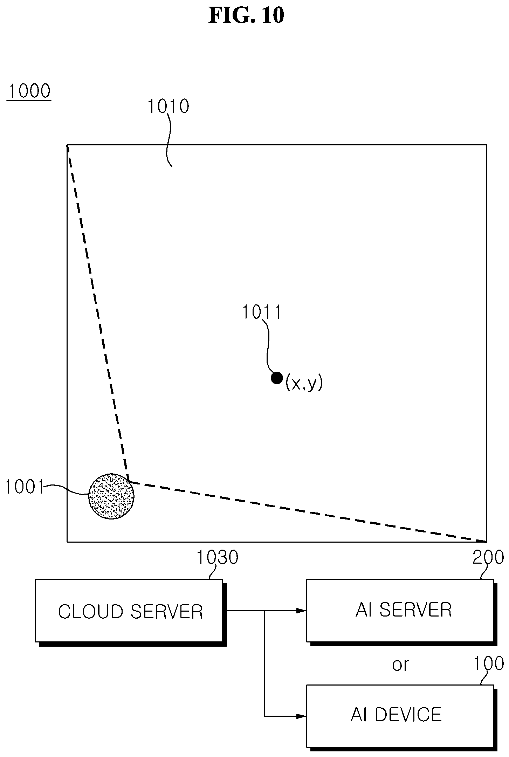

FIG. 10 is a diagram illustrating the configuration of a spatial understanding system according to an embodiment of the present disclosure.

Referring to FIG. 10, the spatial understanding system 1000 may include a millimeter wave sensor 1001, a cloud server 1030, and an AI server 200. The spatial understanding system 1000 may include an AI device 100 instead of the AI server 200.

The millimeter wave sensor 1001 may transmit a electromagnetic wave within a detection area 1010 and acquire a user's location 1011 by detecting electromagnetic wave reflected from the user.

The millimeter wave sensor 1001 may transmit location data corresponding to the acquired user's location 1011 to the cloud server 1030. The location data may be expressed as a coordinate such as (x,y).

The cloud server 1030 may transmit the user's location data to the AI server 200 or the AI device 100.

The cloud server 1030 may be a server for managing one or more home appliances within the sensing area 1010. The cloud server 1030 may be included in the AI server 200 or the AI device 100.

The AI device 100 or the AI server 200 may obtain a cumulative location data set based on the received user location data. The AI device 100 or the AI server 200 may store the user's location data.

The AI device 100 or the AI server 200 may obtain the user's activity space based on the cumulative location data set using a spatial understanding engine. The spatial understanding engine may be an engine that estimates the user's activity space based on a clustering of the cumulative location data set and the polygon approximation algorithm. The spatial understanding engine may be included in the processor 180 of the AI device 100 or the processor 260 of the AI server 200.

The AI device 100 or the AI server 200 may generate a clustering map by clustering the cumulative location data set.

The AI device 100 or the AI server 200 may obtain the shape of the user's activity space from a clustering map generated using a polygon approximation algorithm.

The AI device 100 or the AI server 200 may obtain activity space information based on the obtained shape of the user's activity space.

The AI device 100 or the AI server 200 may store the obtained activity space information.

The AI device 100 or the AI server 200 may transmit the obtained activity space information to the cloud server 1030. The acquired activity space information may be used for an efficient control of a home appliance within the sensing area 1010.

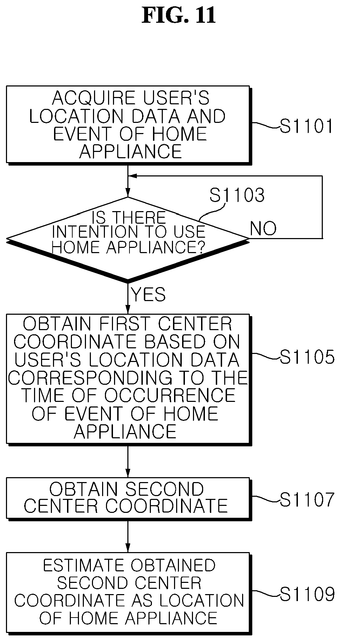

FIG. 11 is a flowchart for illustrating a method of operating an artificial intelligence device according to another embodiment of the present disclosure.

The processor 180 of the artificial intelligence device 100 may acquire a user's location data and an event of a home appliance (S1101).

The processor 180 may receive the user location data from a millimeter wave sensor.

The processor 180 may receive the event of the home appliance from the home appliance or the cloud server 1030. The event of a home appliance may indicate a change in an operating state occurring in the home appliance. For example, the event for the home appliance may be any one of an open event indicating a door of the home appliance is opened, a close event indicating the door of the home appliance is closed, an on event where the home appliance is turned on, or an off event where the home appliance is turned off.

An event occurrence point of the home appliance may be the event acquisition point of the home appliance.

The processor 180 may obtain an occurrence of the event of the home appliance and a time of the occurrence of the event.

The processor 180 may determine whether there is an intention to use the home appliance based on location data prior to the occurrence of the event of the home appliance (S1103).

When the event of the home appliance is acquired, the processor 180 may determine whether there is the intention to use the home appliance based on the user's location data collected for a certain period of time before the acquisition of the event of the home appliance. The certain period of time may be 3 seconds, but this is just an example.

The processor 180 may track the user's location based on the user's location data collected for the certain period of time before the event of the home appliance is acquired. The processor 180 may obtain a user's movement path according to a user's location tracking.

In one embodiment, the processor 180 may determine that there is the intention to use the home appliance if the tracked user's movement path matches a preset pattern. The preset pattern may be a straight pattern, but this is only an example.

In another embodiment, the processor 180 may determine that there is the intention to use the home appliance if a tracked distance of the user's movement path is more than a certain distance.

When it is determined that there is the intention to use the home appliance, the processor 180 may calculate an average of the positions based on the user's location data corresponding to the time of occurrence of the event of the home appliance, and obtain the calculated average as a first center coordinate (S1105).

The processor 180 may calculate an average coordinate value of the positions of the user's location data corresponding to the time of occurrence of the event of the home appliance. The processor 180 may obtain the average coordinate value as the first center coordinate of the home appliance.

The processor 180 may obtain a second center coordinate (S1107).

The processor 180 of the artificial intelligence device 100 may calculate the average distance between the location of the millimeter wave sensor and the user's location. The processor 180 may remove the user's location whose distance from the location of the millimeter wave sensor is greater than the average distance among the locations used to calculate the first center coordinates. After removal, the processor 180 may recalculate the average coordinate value of the remaining positions to obtain the second center coordinates.

The processor 180 may estimate the obtained second center coordinate as the location of the home appliance (S1109).

The processor 180 may obtain locations of a plurality of home appliances in the same manner as above.

In one embodiment, the processor 180 may place the obtained location of each home appliance within the detection area of the millimeter wave sensor.

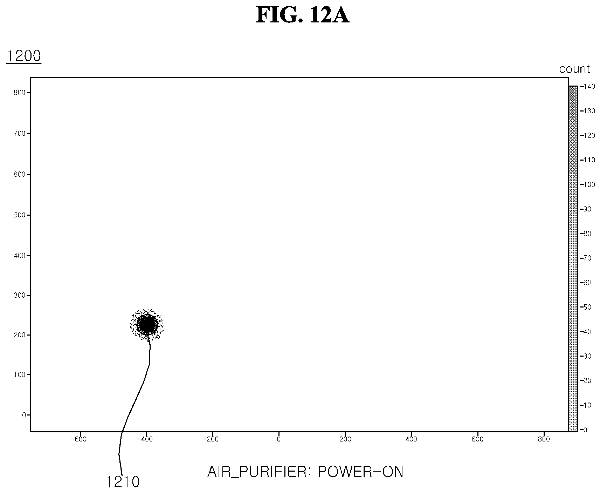

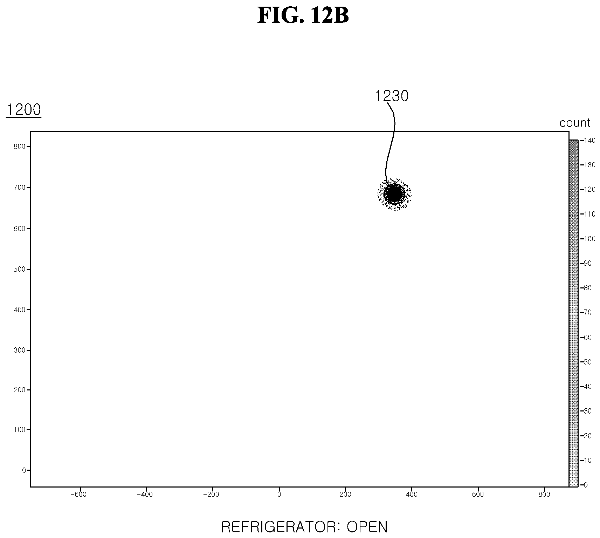

FIGS. 12A and 12B are diagrams showing the linkage between user's location data and an event of home appliance.

Referring to FIG. 12A, the artificial intelligence device 100 may identify a first location distribution 1210 within a sensing area 1200 based on the user's location data collected in real time. The first location distribution 1210 may be a heat map based on the user's cumulative location data.

The artificial intelligence device 100 may obtain the first location distribution 1210 based on location data collected at the time an air purifier is turned on. The artificial intelligence device 100 may estimate the location of the air purifier using the first location distribution 1210. The first location distribution 1210 may include a set of user location data collected at the time the air purifier is turned on.

The artificial intelligence device 100 may sequentially calculate the first center coordinate and the second center coordinate through the first position distribution 1210, and obtain the second center coordinate as the location of the air purifier.

Referring to FIG. 12B, the artificial intelligence device 100 may identify a second location distribution 1230 within the sensing area 1200 based on the user's location data collected in real time. The second location distribution 1230 may be a heat map based on the user's cumulative location data.

The artificial intelligence device 100 may obtain the second location distribution 1230 based on location data collected at the time a refrigerator door is opened. The artificial intelligence device 100 may estimate the location of the refrigerator using the second location distribution 1230. The second location distribution 1230 may include a set of user location data collected at the time the refrigerator door is opened.

The artificial intelligence device 100 may sequentially calculate the first center coordinate and the second center coordinate through the second position distribution 1230, and obtain the second center coordinate as the location of the refrigerator.

After estimating the location of the air purifier, the artificial intelligence device 100 may update a relative location of the refrigerator within the detection area.

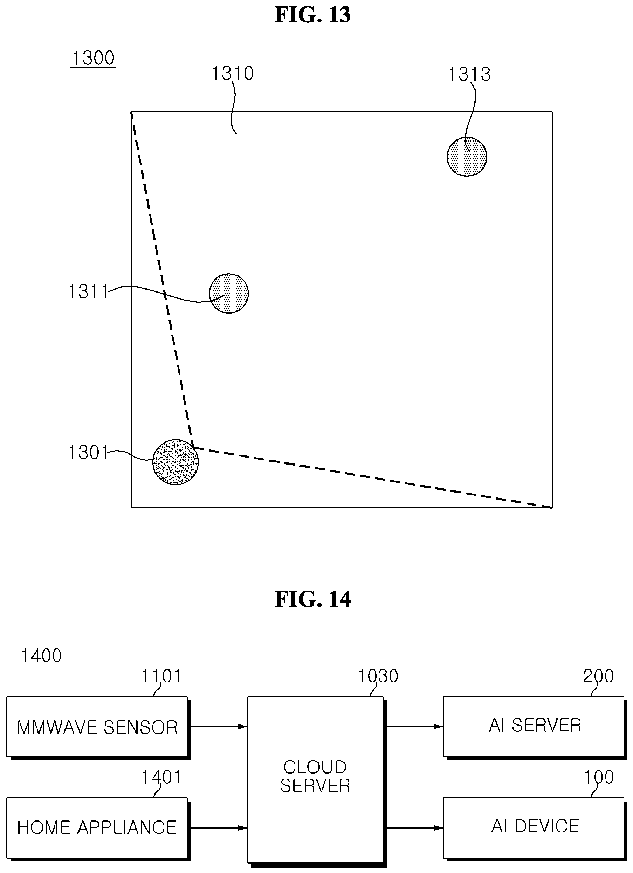

FIG. 13 is a diagram illustrating an example of identifying the estimated location of a home appliance according to an embodiment of the present disclosure.

The processor 180 of the artificial intelligence device 100 may display a location estimation screen 1300 of the home appliance on the display 151.

The location estimation screen 1300 of the home appliance may include a location of the millimeter wave sensor 1301, a detection area 1310 of the millimeter wave sensor, a location of a first home appliance 1311, and a location 1313 of a second home appliance.

The sensing area 1310 may correspond to the sensing area 1200 of FIGS. 12A and 12B.

The location 1311 of the first home appliance may represent the location of the air purifier in FIG. 12A, and the location 1313 of the second home appliance may represent the location of the refrigerator in FIG. 12B.

According to an embodiment of the present disclosure, the relative positions of home appliances may be identified using the millimeter wave sensor and the event of home appliance.

As such, according to an embodiment of the present disclosure, the location of the home appliance and the relative position of the home appliance may be estimated using the millimeter wave sensor and the event of the home appliance. The estimated position of the home appliance and the relative positions of home appliances may be useful for efficient placement and efficient control of the home appliance.

Additionally, since there is no need for a separate photographing device such as a camera, the user's privacy may be protected.

FIG. 14 is a diagram illustrating a location estimation system according to an embodiment of the present disclosure.

FIG. 14 may be a location estimation system 1400 that estimates the location of the home appliance.

The location estimation system 1400 may include a millimeter wave sensor 1101, a home appliance 1401, a cloud server 1030, and an AI server 200. The location estimation system 1400 may further include an AI device 100.

The millimeter wave sensor 1101 may collect the user's location data and transmit the collected location data to the cloud server 1030.

The home appliance 1401 may detect an occurrence of an event and transmit information on the detected event to the cloud server 1030. Information on the event may include at least one of a type of an operating state of the home appliance 1401 or a time of an occurrence of the event.

The cloud server 1030 may transmit the user's location data and the event of the home appliance 1401 to the AI server 200 or the AI device 100.

The AI server 200 or the AI device 100 may determine whether there is an intention to use the home appliance based on location data prior to the occurrence of the event of the home appliance.

If it is determined that there is the intention to use the home appliance, the AI server 200 or the AI device 100 may calculate an average of the positions based on the user's location data corresponding to the time of occurrence of the event of the home appliance, and obtain the calculated average as the first center coordinate.

The AI server 200 or AI device 100 may calculate an average distance between the location of the millimeter wave sensor and the user's location. The AI server 200 or the AI device 100 may remove the user's location whose distance from the millimeter wave sensor is greater than the average distance among the locations used to calculate the first center coordinate. After removal, the AI server 200 or the AI device 100 may recalculate the average coordinate value of the remaining positions to obtain the second center coordinate.

The AI server 200 or the AI device 100 may estimate the second center coordinate as the location of the home appliance.

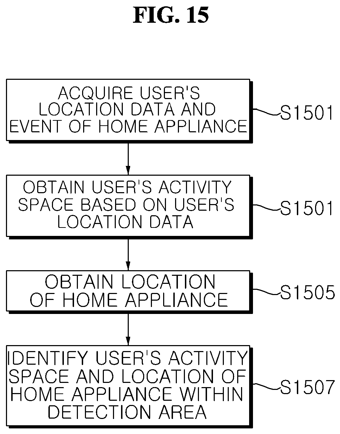

FIG. 15 is a flowchart for illustrating a method of operating an artificial intelligence device according to another embodiment of the present disclosure.

FIG. 15 may be an embodiment of identifying the user's activity space and the location of the home appliance within the detection area based on the user's location data and the event of the home appliance.

Referring to FIG. 15, the processor 180 of the artificial intelligence device 100 may acquire the user's location data and an event of the home appliance (S1501).

The processor 180 may receive the user's location data from a millimeter wave sensor.

The processor 180 may receive an event of an home appliance from the home appliance or the cloud server 1030.

The processor 180 may obtain the user's activity space based on the user's location data (S1503).

The processor 180 may obtain the user's activity space within the detection area of the millimeter wave sensor. The process of acquiring the user's activity space based on the user's location data is replaced with the description of the embodiment of FIGS. 3 and 4.

The processor 180 may obtain the location of the home appliance based on the user's location data and the event of the home appliance (S1505).

The processor 180 may obtain the location of the home appliance within the detecting area based on the user's location data and the event of the home appliance. The process of acquiring the location of the home appliance based on the user's location data and the event of the home appliance is replaced with the description of the embodiment of FIG. 11.

The processor 180 may identify the user's activity space and the location of the home appliance within the detection area (S1507).

The processor 180 may display a detection area in which the user's activity space and the location of the home appliance are identified on the display 151. The processor 180 may display the detection area according to an execution of the home appliance management application.

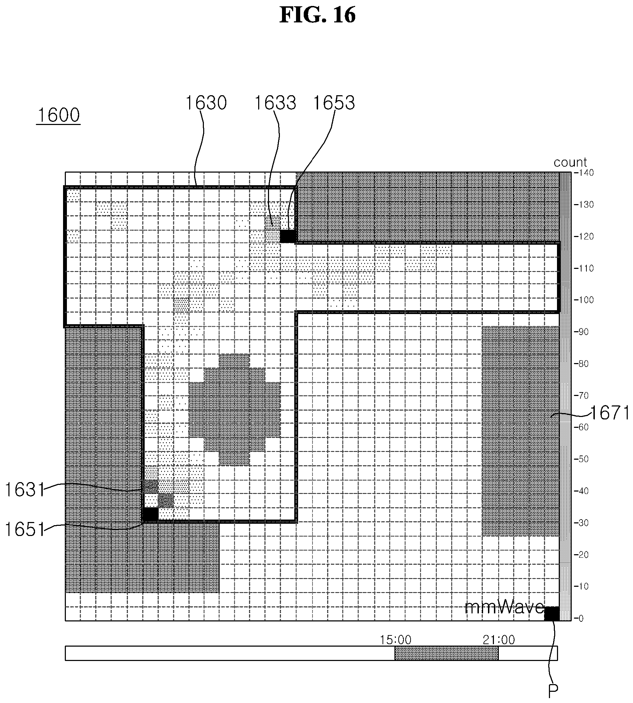

FIG. 16 is a diagram illustrating a screen that provides the user's activity space, main occupied space, and the location of home appliances according to an embodiment of the present disclosure.

Referring to FIG. 16, the processor 180 of the artificial intelligence device 100 may display a service screen 1600 on the display 151 according to receiving a command.

The service screen 1600 may include a user's activity space 1630 identified on a detection area 1610 of the millimeter wave sensor, main occupied spaces 1631 and 1633 included within the activity space 1630, and a location of a first home appliance 1651 and a location of a second home appliance 1653.

The service screen 1600 may further include a location (P) of the millimeter wave sensor.

The service screen 1600 may further include a location 1671 of one or more households.

The service screen 1600 may be provided differently for each user. This is because location data may be collected differently for each user. The artificial intelligence device 100 may display a first service screen corresponding to a first user on the display 151 in response to a request of the first user, and display a second service screen corresponding to a second user on the display 151 in response to a request of the second user.

Accordingly, a control of home appliance optimized for each user may be performed.

The processor 180 may provide a recommended location of the home appliance based on the user's activity space 1630, the main occupied space 1631, 1633, and the location of the home appliance 1651, 1653.

For example, the processor 180 may display a placement guide on the display 151 that allows the air purifier to be placed within the main occupied spaces 1631, 1633.

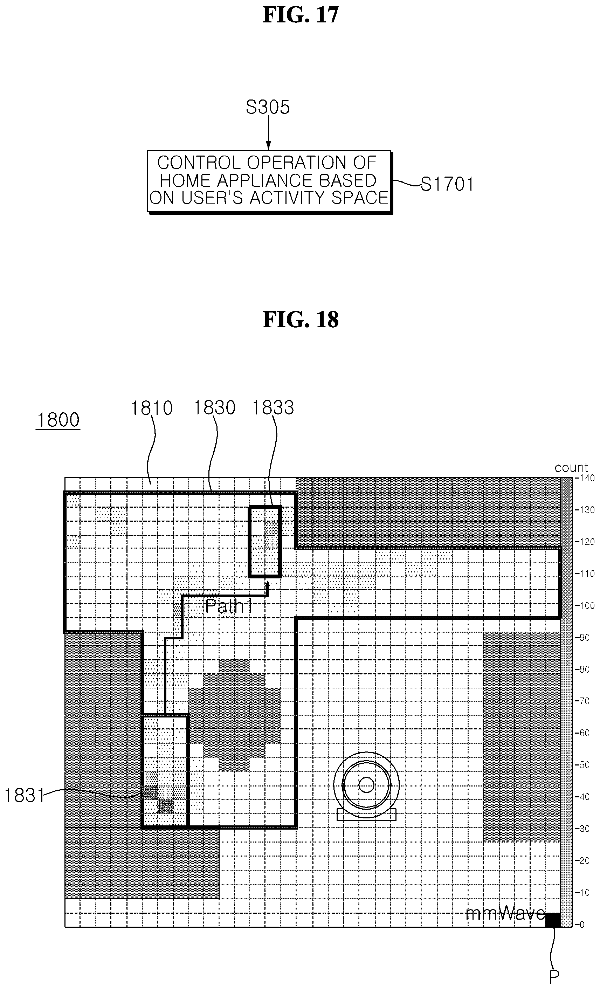

FIG. 17 is a flowchart for illustrating a method of operating an artificial intelligence device according to another embodiment of the present disclosure.

The embodiment of FIG. 17 may be performed after step S305 of FIG. 3.

The processor 180 of the artificial intelligence device 100 may control the operation of the home appliance based on the acquired user's activity space (S1701).

The home appliance may be any one of a robot vacuum cleaner, an air conditioner, or an air purifier, but this is only an example.

The processor 180 may control the operation of the home appliance based on the user's activity space and one or more main occupied spaces included in the activity space.

First, when the home appliance is the robot vacuum cleaner, an embodiment of controlling the robot vacuum cleaner based on the user's activity space or main occupied space will be described.

In one embodiment, the processor 180 may control the operation of the robot vacuum cleaner to clean the user's activity space first. The processor 180 may transmit information on the detection area, the activity space identified within the detection area, main occupied space, and the arrangement of furniture to the robot vacuum cleaner.

In another embodiment, the processor 180 may set a cleaning path of the robot vacuum cleaner to clean main occupied spaces within the activity space first.

The processor 180 may transmit a cleaning control signal including coordinate information of the main occupied spaces to the robot vacuum cleaner through the communication interface 110. The robot vacuum cleaner may clean the main occupied spaces based on the cleaning control signal received from the artificial intelligence device 100.

The processor 180 may transmit a cleaning control signal to the robot vacuum cleaner after detecting the last location of the user within the detection area. This is to ensure that cleaning is performed after the user leaves the detection area.

In one embodiment, the processor 180 may set a cleaning path by setting a priority for main occupied spaces. The processor 180 may set the cleaning path of the robot vacuum cleaner o that it cleans the space with the highest frequency of location data among the main occupied spaces first, followed by the space with lower frequencies. The processor 180 may transmit a cleaning control signal including a set cleaning path to the robot vacuum cleaner through the communication interface 110.

In another embodiment, the processor 180 may set a different cleaning mode for each of the main occupied spaces. The cleaning mode may include a powerful cleaning mode and a normal cleaning mode. The powerful cleaning mode may require more cleaning intensity and cleaning time than the normal cleaning mode.

The cleaning mode may vary depending on a plurality of cleaning factors. The plurality of cleaning factors may include at least one of a cleaning time, a motor suction power, a brush rotation speed, a pressure applied to a cleaning mop, a steam spray amount, a water spray amount, or the number of repeated cleaning in a specific section.

Specifically, the powerful cleaning mode may be a mode in which at least one of the plurality of cleaning factors is greater than the normal cleaning mode.

The cleaning mode may be subdivided into more modes in addition to the normal mode and the powerful cleaning mode. Each of the plurality of cleaning modes may have different size or intensity of at least one of the plurality of cleaning factors.

The processor 180 may determine the size or the intensity each of the plurality of cleaning factors that determine the cleaning mode differently depending on the frequency of the location data.

For example, the processor 180 may control the robot vacuum cleaner so that as the frequency of location data increases, the size or intensity of the plurality of cleaning factors that determine the cleaning mode increases.

The processor 180 may control the robot vacuum cleaner so that as the frequency of the location data decreases, the size or intensity of the plurality of cleaning factors that determine the cleaning mode decreases.

If the frequency of location data is greater than or equal to a preset frequency, the processor 180 may set the cleaning mode for the main occupied space to the powerful cleaning mode. If the frequency of location data is less than the preset frequency, the processor 180 may set the cleaning mode for the main occupied space to the normal cleaning mode.

The processor 180 may transmit a cleaning control signal including a cleaning mode set for each main occupied space to the robot vacuum cleaner through the communication interface 110. Accordingly, cleaning of the space mainly occupied by the user may be performed intensively.

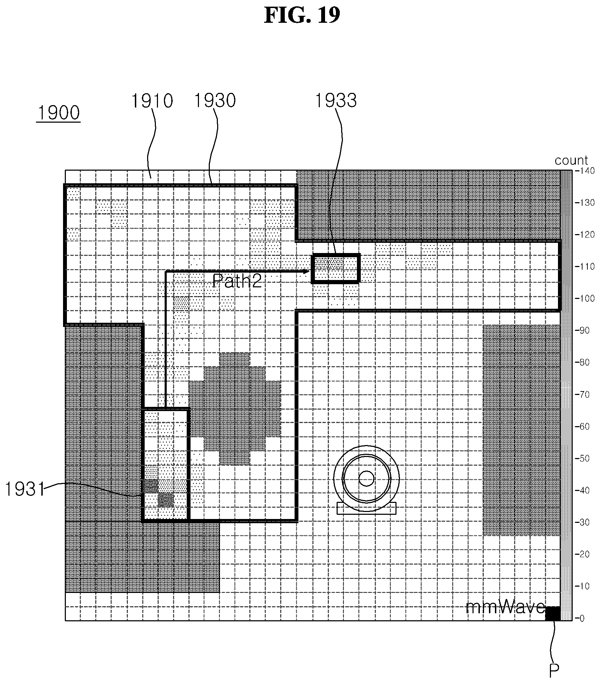

FIGS. 18 and 19 are diagrams illustrating an example of controlling the cleaning path of a robot vacuum cleaner differently based on the main occupied space of each of a first user and a second user according to an embodiment of the present disclosure.

FIG. 18 may be a diagram illustrating a first user service screen 1800 including a detection area 1810 detected based on the position (P) of the millimeter wave sensor. The first user service screen 1800 may be referred to as a first user map. The artificial intelligence device 100 may display the first user service screen 1800 corresponding to the first user on the display 151.

The artificial intelligence device 100 may identify a first activity space 1830 of the first user and main occupied spaces 1831 and 1833 within the first activity space 1830 based on location data corresponding to the first user. The first activity space 1830 and the main occupied spaces 1831 and 1833 within the first activity space 1830 may be expressed in the form of a heat map.

The artificial intelligence device 100 may transmit a first cleaning control signal to the robot vacuum cleaner to perform cleaning along a first cleaning path (Path1) starting from the first main occupied space 1831 and moving to the second main occupied space 1833.

The robot vacuum cleaner may perform cleaning along the first cleaning path (Path1) according to the first cleaning control signal.

FIG. 19 may be a second user service screen 1900 including the detection area 1810 detected based on the position (P) of a millimeter wave sensor located in the same location as that of FIG. 18 . The second user service screen 1900 may be referred to as a second user map. The artificial intelligence device 100 may display the second user service screen 1900 corresponding to the second user on the display 151.

The artificial intelligence device 100 may identify a second activity space 1930 of the second user and main occupied spaces 1931 and 1933 within the second activity space 1930 based on location data corresponding to the second user. The second activity space 1930 and the main occupied spaces 1931 and 1933 within the second activity space 1930 may be expressed in the form of a heat map.

A shape and size of the first activity space 1830 of FIG. 18 may be different from a shape and size of the second activity space 1930 of FIG. 19.

The shape, size, and location of the main occupied spaces 1831 and 1833 in FIG. 18 may be different from the main occupied spaces 1931 and 1933 in FIG. 19 .

The artificial intelligence device 100 may transmit a second cleaning control signal to the robot vacuum cleaner to perform cleaning along a second cleaning path (Path2) starting from the third main occupied space 1931 and moving to the fourth main occupied space 1933.

The robot vacuum cleaner may perform cleaning along the second cleaning path (Path2) according to the second cleaning control signal.

As such, according to an embodiment of the present disclosure, the operation of the home appliance may be controlled differently based on the main occupied space of each user. Accordingly, control of home appliance may be performed in a personalized manner, thereby improving a user convenience.

Next, when the home appliance is the air conditioner, an embodiment of controlling the air conditioner based on the user's activity space or main occupied space will be described.

In one embodiment, the processor 180 may obtain the user's main occupied space for each time period and control the operation of the air conditioner differently for each time period.

For example, processor 180 may extract a first main occupied space representing an area with the highest frequency of location data in a lunch time period and a second main occupied space representing an area with the highest frequency of location data in an evening time period. The first and second main occupied spaces may be obtained based on location data collected over two weeks, but two weeks is only an example period. The location data may be collected during the period from when the user enters the detection area to when the user leaves the detection area.

The processor 180 may control the air conditioner to lower a temperature of the first main occupied space by a preset temperature before the lunch time period arrives.

Additionally, the processor 180 may control the air conditioner to lower the temperature of the second main occupied space by a preset temperature before the evening time period arrives.

In another embodiment, the processor 180 may recognize the main occupied space matched to each user and control the air conditioner to adjust the temperature of the main occupied space matched to that user.

For example, when the processor 180 detects that the first user will enter the detection area after a certain period of time, the processor 180 may control the air conditioner to lower the temperature of the first main occupied space matching the first user by a preset temperature.

When the processor 180 detects that the second user will enter the detection area after a certain period of time, the processor 180 may control the air conditioner to lower the temperature of the second main occupied space matching the second user by a preset temperature.

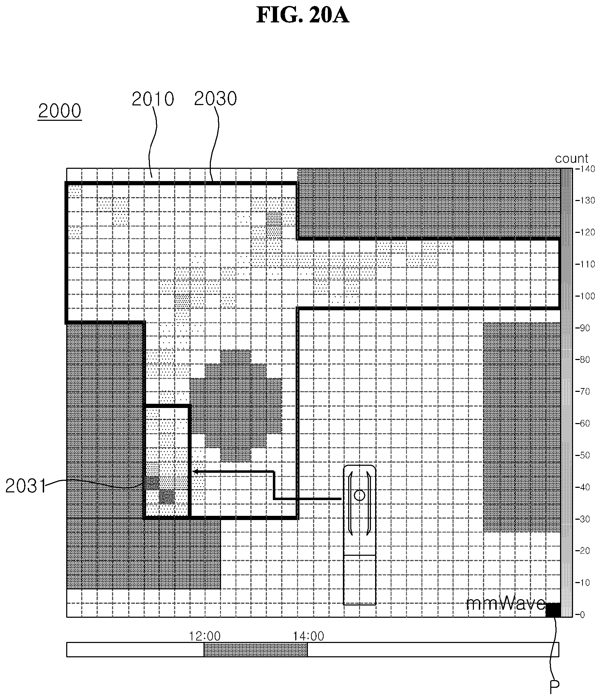

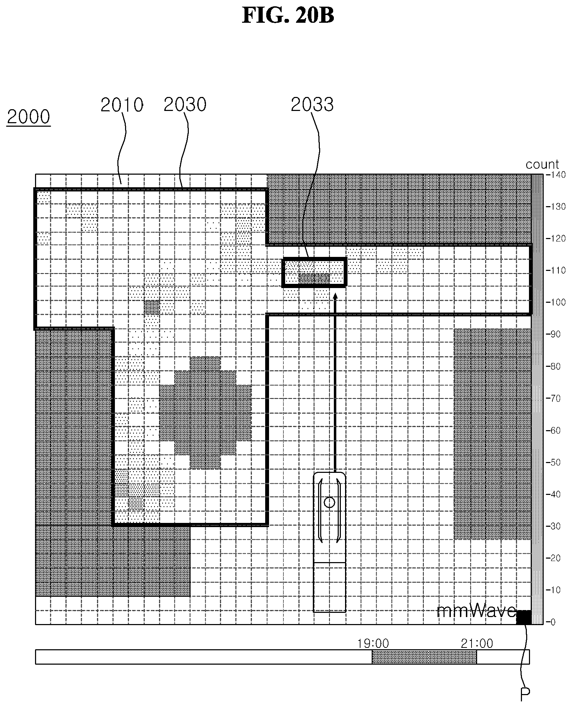

FIGS. 20A and 20B are diagrams illustrating an example of extracting main occupied spaces for each time period and controlling cooling of the extracted main occupied spaces according to an embodiment of the present disclosure.

FIG. 20A may be a diagram illustrating a user service screen 2000 including a detection area 2010 detected based on the position P of the millimeter wave sensor. The user service screen 2000 may be referred to as a user map. The artificial intelligence device 100 may display the user service screen 2000 on the display 151.

Referring to FIG. 20A, the artificial intelligence device 100 may identify a user's activity space 2030 and a first main occupied space 2031 within the activity space 2030 based on the user's location data. The first main occupied space 2031 may be a space based on location data obtained in a first time period for two weeks. The first main occupied space 2031 may be a set of unit areas in which the frequency of user location data is greater than or equal to a preset frequency. The first time period may be from 12:00 to 14:00.

The activity space 2030 and the first main occupied space 2031 within the activity space 2030 may be expressed in the form of a heat map.

The artificial intelligence device 100 may transmit a first cooling control signal to the air conditioner to lower the temperature of the first main occupied space to a preset temperature before the first time period arrives. The first cooling control signal may be a signal that controls an air volume and air speed of the air conditioner.

Accordingly, before the first time period arrives, the temperature of the first main occupied space 2031 where the user mainly stays is lowered in advance, so the user may not feel the heat.

Referring to FIG. 20B, the artificial intelligence device 100 may identify the user's activity space 2030 and a second main occupied space 2033 within the activity space 2030 based on the user's location data. The second main occupied space 2033 may be a space based on location data obtained in a second time period for two weeks. The second main occupied space 2033 may be a set of unit areas in which the frequency of user location data is greater than or equal to a preset frequency. The second time period may be from 19:00 to 21:00.

The activity space 2030 and the second main occupied space 2033 within the activity space 2030 may be expressed in the form of a heat map.

The artificial intelligence device 100 may transmit a second cooling control signal to the air conditioner to lower the temperature of the second main occupied space to a preset temperature before the second time period arrives. The second cooling control signal may be a signal that controls the air volume and air speed of the air conditioner.

Accordingly, before the second time period arrives, the temperature of the second main occupied space 2033 where the user mainly stays is lowered in advance, so the user may not feel the heat.

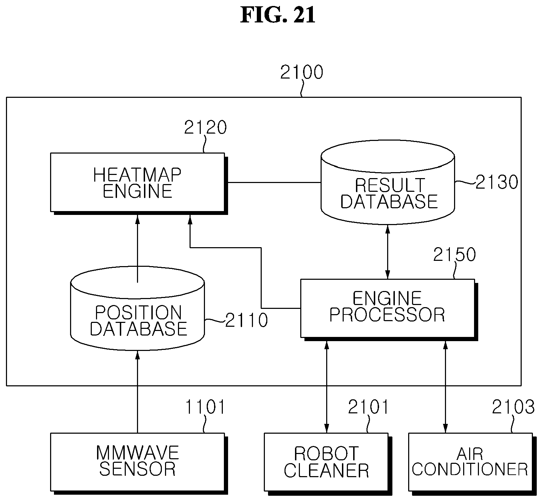

FIG. 21 is a diagram for illustrating the configuration of an artificial intelligence cloud device according to another embodiment of the present disclosure.

The artificial intelligence cloud device 2100 may include a location database 2110, a heat map engine 2120, a result database 2130, and an engine processor 2150.

The location database 2110 may store the user's location data collected by the millimeter wave sensor 1101. One or more millimeter wave sensors 1101 may be provided. In this case, each millimeter wave sensor may transmit location data (coordinate information) along with an ID that identifies itself to the artificial intelligence device 2100.

The location database 2110 may store a cumulative location data set.

The heat map engine 2120 may generate a heat map representing the user's location distribution based on the cumulative location data set. The heat map engine 2120 may generate a plurality of heat maps for each time period for one user.

The heat map engine 2120 may generate the user's activity space and main occupied space based on the heat map. The process of generating the user's activity space and main occupied space based on the heat map is the same as the embodiment of FIGS. 3 and 4.

The heat map engine 2120 may periodically generate the heat map, activity space, and main occupancy space. The heat map engine 2120 may generate the heat map, activity space, and main occupied space when the cumulative capacity of location data is more than a certain amount.

The heat map engine 2120 may obtain the heat map, user activity space, and main occupied space for each place using the millimeter wave sensor installed in each of a plurality of places.

The result database 2130 may store the generated heat map, the user's activity space, and the main occupied space.

The engine processor 2150 may generally control the operation of the artificial intelligence device 2100. The engine processor 2150 may control the operation of the heat map engine 2120 and home appliances such as a robot vacuum cleaner 2101 and an air conditioner 2103.

The engine processor 2150 may transmit information on the heat map, the user's activity space, and the main occupied space stored in the result database 2130 to the robot vacuum cleaner 2101 and the air conditioner 2103.

The engine processor 2150 may transmit a control signal based on at least one of information on the heat map, the user's activity space, or the main occupied space stored in the result database 2130 to the robot vacuum cleaner 2101 or the air conditioner 2103.

The artificial intelligence cloud device 2100 may be an example of the AI device 100 of FIG. 1 or the AI server 200 of FIG. 2.

When the artificial intelligence cloud device 2100 is an example of the AI device 100 of FIG. 1, the location database 2110 and the result database 2130 may be included in the memory 170, and the heat map engine 2120 and the engine processor 2150 may be included in the processor 180.

When the artificial intelligence cloud device 2100 is an example of the AI server 200 of FIG. 2, the location database 2110 and the result database 2130 may be included in the memory 230, and the heat map engine 2120 and the engine processor 2150 may be included in the processor 260.

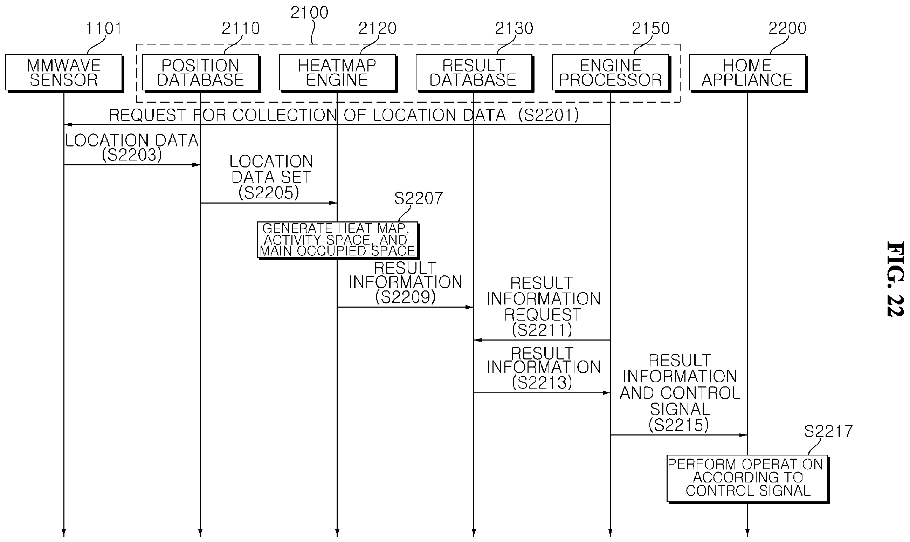

FIG. 22 is a sequence diagram illustrating a method of operating a system according to an embodiment of the present disclosure.

The engine processor 2150 may transmit a request for collection of user's location data to the millimeter wave sensor 1101 (S2201).

The engine processor 2150 may transmit a request for collection of the user's location data and information on a collection cycle of the location data to the millimeter wave sensor 1101.

The engine processor 2150 may communicate with the millimeter wave sensor 1101 through a communication interface.

The millimeter wave sensor 1101 may collect the user's location data in response to the request and transmit the collected location data to the location database 2110 (S2203).

The millimeter wave sensor 1101 may collect its own identifier and user's location data.

The location database 2110 may accumulate the location data received from the millimeter wave sensor 1101, obtain a location data set, and transmit the obtained location data set to the heat map engine 2120 (S2205).

The heat map engine 2120 may request the location data set collected for each time period from the location database 2110.

The heat map engine 2120 may generate at least one of a heat map, a user's activity space, and a main occupied space based on the location data set (S2207), and transmit result information including the heat map, the user's activity space, and the main occupied space to the result database 2130 (S2209).

The heat map engine 2120 may receive a control command indicating a heat map generation cycle received from the engine processor 2150 and generate the heat map at a cycle according to the received control command.

The resulting database 2130 may store the heat map, the user activity space, and the main occupied space. The result database 2130 may store the heat map, the user's activity space, and the main occupied space for each user. The result database 2130 may store the heat map, the user activity space, and the main occupied space for each time period.

The engine processor 2150 may transmit a result information request to the result database 2130 (S2211) and receive the result information from the result database 2130 in response to the result information request (S2213).

The engine processor 2150 may transmit the result information and a control signal for controlling the operation of the home appliance 2200 to the home appliance 2200 (S2215).

The control signal may be a signal generated based on the result information.

The home appliance 2200 may perform an operation according to the control signal using the result information (S2217).

The home appliance 2200 may be either the robot vacuum cleaner 2101 or the air conditioner 2103 of FIG. 21 .

The electronic device 100 according to an embodiment of the present disclosure may comprise a memory 170 configured to store location data of a user; and at least one processor 180 configured to: obtain a cumulative location data set based on the location data, generate a heat map representing a location distribution of the user based on the cumulative location data set, and obtain an activity space of the user based on the generated heat map.

The activity space may include one or more main occupied spaces, and the one or more main occupied spaces represent an area where a cumulative frequency of the location data is more than a preset frequency.

The one or more main occupied spaces may be different for each of a plurality of users.

The one or more main occupied spaces may be different for each time period.

The heat map may be a personalized map based on the location data.

The electronic device 100 may further comprise a display 151, the at least one processor 180 is further configured to display a detection area of a sensor that acquires the location data and the activity space on the display 151.

The activity space may include one or more main occupied spaces and the one or more main occupied spaces represent an area where a cumulative frequency of the location data is more than a preset frequency.

The one or more main occupied spaces may be displayed differently for each user or time period.

The at least one processor 180 may cluster the cumulative location data set to generate a clustering map, and obtain a shape of the activity space from the clustering map using a polygon approximation algorithm.

The at least one processor 180 may obtain activity space information including at least one of an area of the activity space or an angle formed between the activity space and a sensor collecting the location data based on the shape of the activity space.

The at least one processor 180 may extract a plurality of cluster areas from the cumulative location data set using DBSCAN (Density-Based Spatial Clustering of Applications with Noise) technique, identify high-density areas among the plurality of clustering areas, and generate the clustering map based on the identified high-density areas.

The at least one processor 180 may obtain an event of a home appliance, and obtain a location of the home appliance based on the location data of the user collected at the time of acquiring the event.

The event of the home appliances may represent a change in an operating state of the home appliance.

The electronic device 100 may further comprise a display 151, the at least one processor 180 may display the activity space and the location of the home appliance on the display 151.

The electronic device 100 may further comprise a communication interface 110, the at least one processor 180 may receive the location data from a millimeter wave sensor through the communication interface.

The present disclosure described above may be implemented as computer-readable code on a program-recorded medium. The computer-readable media includes all types of recording devices that store data that may be read by a computer system. Examples of computer-readable media are HDD (Hard Disk Drive), SSD (Solid State Disk), SDD (Silicon Disk Drive), ROM, RAM, CD-ROM, magnetic tape, floppy disk, optical data storage device, etc. Additionally, the computer may include a processor 180 of the artificial intelligence device.

## Claims

1. An electronic device (100), comprising:
a memory (170) configured to store location data of a user; and
at least one processor (180) configured to:
obtain a cumulative location data set based on the location data,
generate a heat map representing a location distribution of the user based on the cumulative location data set, and
obtain an activity space of the user based on the generated heat map.

2. The electronic device (100) of claim 1, wherein the activity space includes one or more main occupied spaces, and the one or more main occupied spaces represent an area where a cumulative frequency of the location data is more than a preset frequency.

3. The electronic device (100) of claim 2, wherein the one or more main occupied spaces are different for each of a plurality of users.

4. The electronic device (100) of claim 2, wherein the one or more main occupied spaces are different for each time period.

5. The electronic device (100) of any one of claims 1 to 4, wherein the heat map is a personalized map based on the location data.

6. The electronic device (100) of any one of claims 1 to 5, further comprising a display (151),
wherein the at least one processor is further configured to display a detection area of a sensor that acquires the location data and the activity space on the display.

7. The electronic device (100) of any one of claims 1 to 6, wherein the activity space includes one or more main occupied spaces and the one or more main occupied spaces represent an area where a cumulative frequency of the location data is more than a preset frequency.

8. The electronic device (100) of claim 7, wherein the one or more main occupied spaces are displayed differently for each user or time period.

9. The electronic device (100) of any one of claims 1 to 8, wherein the at least one processor (180) is further configured to:
cluster the cumulative location data set to generate a clustering map, and
obtain a shape of the activity space from the clustering map using a polygon approximation algorithm.

10. The electronic device (100) of claim 9, wherein the at least one processor (180) is further configured to:
obtain activity space information including at least one of an area of the activity space or an angle formed between the activity space and a sensor collecting the location data based on the shape of the activity space.

11. The electronic device (100) of claim 9 or 10, wherein the at least one processor (180) is configured to:
extract a plurality of cluster areas from the cumulative location data set using Density-Based Spatial Clustering of Applications with Noise, DBSCAN, technique,
identify high-density areas among the plurality of clustering areas, and
generate the clustering map based on the identified high-density areas.

12. The electronic device (100) of any one of claims 1 to 11, wherein the at least one processor (180) is further configured to:
obtain an event of a home appliance, and
obtain a location of the home appliance based on the location data of the user collected at a time of acquiring the event.

13. The electronic device (100) of claim 12, wherein the event of the home appliance represents a change in an operating state of the home appliance.

14. The electronic device (100) of claim 12 or 13, further comprising a display (151),
wherein the at least one processor (180) is further configured to display the activity space and the location of the home appliance on the display (151).

15. The electronic device (100) of any one of claims 1 to 14, further comprising a communication interface (110),
wherein the at least one processor (180) is further configured to receive the location data from a millimeter wave sensor through the communication interface (110).
